# EUROPÄISCHE PATENTSCHRIFT

(11) **EP 1 049 535 B1**
(45) Veröffentlichungstag und Bekanntmachung des Hinweises auf die Patenterteilung: **28.08.2002**
(21) Anmeldenummer: 99932440.3
(22) Anmeldetag: 20.01.1999
(51) Int. Cl.: B01J 13/02

(54) **VERKAPSELTE HYDROGELE**
ENCAPSULATED HYDROGELS
HYDROGELS ENCAPSULES

(30) Priorität: 20.01.1998 DE 19801933
(43) Veröffentlichungstag der Anmeldung: 08.11.2000
(73) Patentinhaber: BASF AKTIENGESELLSCHAFT, 67056 Ludwigshafen (DE)
(72) Erfinder: Funk, Rüdiger, 65527 Niedernhausen (DE); Herfert, Norbert, 63674 Altenstadt (DE); Riegel, Ulrich, 60384 Frankfurt am Main (DE); Weismantel, Matthias, 63637 Jossgrund-Oberndorf (DE); Daniel, Thomas, Chesapeake, VA 23321 (US); Engelhardt, Fritz, Chesapeake, VA 23320 (US)
(86) Internationale Anmeldenummer: EP9900337
(87) Internationale Veröffentlichungsnummer: WO99037395

(56) Entgegenhaltungen:
- EP-A- 0 703 265

## Beschreibung

Die vorliegende Erfindung betrifft verkapselte Hydrogele, das heißt Hydrogele, deren Fähigkeit zur Absorption von Wasser und wäßrigen Flüssigkeiten reversibel blockiert ist, Verfahren zu ihrer Herstellung, sowie Verfahren zur Aufhebung der Verkapselung.

Hydrophile, hochquellfähige Hydrogele sind insbesondere Polymere aus (co)polymerisierten hydrophilen Monomeren, Pfropf(co)polymere von einem oder mehreren hydrophilen Monomeren auf eine geeignete Pfropfgrundlage, vernetzte Cellulose- oder Stärkeether, vernetzte Carboxymethylcellulose, teilweise vernetztes Polyalkylenoxid oder in wäßrigen Flüssigkeiten quellbare Naturprodukte, wie beispielsweise Guarderivate. Solche Hydrogele werden als wäßrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

In zunehmendem Maße sollen hydrophile, hochquellfähige Hydrogele in Flächengebilde aus synthetischen oder natürlichen Fasern oder Fasergemischen oder in wasserabsorbierende Schichten aus Kunststoff- oder Latexschaum eingebracht werden (siehe beispielsweise EP-A-427219 oder DE-A-44 18 319).

EP 0 703 265 A offenbart ein Hydrogel, das mit einem nicht reaktiven, wasserunlöslischen filmbildenden Polymer verkapseltet ist. Das filmbildende Polymer ist wasserunlöslisch aber wasserdurchlässig oder in wäßrigen Lösungen quellbar. Damit ist das verkapselte Hydrogel von EP 0 703 265 A ein hochquellfähiges Absorptionsmittel für wäßrige Flüssigkeiten. Die Absorption von wäßrigen Flüssigkeiten wird somit prinzipiell vom Polymerfilm nicht verhindert.

Da dabei in der Regel in wäßrigem Milieu gearbeitet wird, erweist sich die im Endprodukt hochgeschätzte schnelle Quellbarkeit der genannten Hydrogele in Wasser bzw. wäßrigen Flüssigkeiten als äußerst hinderlich. Die Verarbeitung herkömmlicher Hydrogele in sogenannten "wet-lay" Prozessen, insbesondere ihr Einsatz auf Papiermaschinen ist praktisch unmöglich. Es besteht somit dringender Bedarf nach einer Lösung für dieses Problem.

Es wurde nun gefunden, daß es möglich ist, die Hydrogelteilchen reversibel zu verkapseln, das heißt, reversibel mit einem wasserfesten Film zu überziehen, der die Flüssigkeitsaufnahme verzögert oder sogar völlig verhindert. Auf diese Weise wird die hohe Quellbarkeit der Hydrogele quasi maskiert, so daß diese in wäßrigen Prozessen oder Verfahren zusammen mit anderen Materialien, wie beispielsweise Mineralfasern, Schichtsilikaten, mineralischen Bindern oder Cellulosepulvern in Form von wäßrigen Pasten oder Slurries verarbeitet werden können, ohne zu quellen oder Wasser oder wäßrige Flüssigkeiten zu absorbieren.

Die vorliegende Erfindung betrifft demnach ein verkapseltes Hydrogel, umfassend ein hydrophiles, hochquellfähiges Hydrogel, das reversibel mit einem Material überzogen ist, das die Aufnahme von Wasser und wäßrigen Flüssigkeiten verzögert oder verhindert.

Materialien, die erfindungsgemäß zum reversiblen Überzug von Hydrogelen geeignet sind, sind beispielsweise synthetische, natürliche oder modifizierte natürliche Polymere oder Harze, die auf der Oberfläche der Hydrogelpartikel wasserundurchlässige bzw. wasserfeste Filme oder Schichten bilden können.
Geeignete Polymere können beispielsweise Homo- und/oder Copolymerisate olefinisch ungesättigter Verbindungen, wie beispielsweise Ethylen, Propylen, Styrol, Ester olefinisch ungesättigter Säuren und Ester olefinisch ungesättigter Alkohole, Aminoplastharze, wie beispielsweise Harnstoff oder Melamin/Aldehydharze, Phenolharze, Polyepoxide, Polyesterverbindungen, Polyacetale, Polycarbonate, Polyamide, Polyurethane,Siliconharze, Keton/Aldehydharze oder Alkydharze sein.

Die erfindungsgemäßen verkapselten Hydrogele werden beispielsweise dadurch hergestellt, daß die Materialien, die die Aufnahme von Wasser oder wäßrigen Flüssigkeiten verhindern, auf das hydrophile, hochquellfähige Hydrogel aufgebracht werden. Die genannten Materialien werden insbesondere in Form von Lösungen, Dispersionen, Suspensionen, Schmelzen oder auch als Pulver auf das in der Regel gemahlene und gesiebte hydrophile, hochquellfähige Hydrogel in dafür geeigneten Apparaturen aufgebracht. Bevorzugt ist das Aufsprühen von Polymerlösungen auf die Hydrogelpartikel in Reaktionsmischern oder Misch- und Trocknungsanlagen wie beispielsweise Loedige-Mischer, BEPEX-Mischer, NAUTA-Mischer, SCHUGGI-Mischer, PROCESSALL usw.. Das Aufsprühen von Lösungen kann überdies auch in Wirbelschichttrocknern erfolgen. Für den Fall, daß es sich bei den genannten Materialien um schmelzbare Pulver oder Granulate handelt, können sie zunächst in fester Form auf das hydrophile, hochquellfähige Hydrogel aufgebracht werden, um dann in einem nachfolgenden Schritt die Temperatur über den Schmelzpunkt des Pulvers bzw. Granulats zu erhöhen, damit die Teilchenoberfläche völlig belegt werden kann und eine feste Umhüllung ausgebildet wird.

Die Herstellung der erfindungsgemäßen verkapselten Hydrogele kann auch dadurch erfolgen, daß auf die Teilchenoberfläche nach den oben beschriebenen Methoden monomere oder oligomere Komponenten aufgebracht und diese dann durch beispielsweise Polymerisation, Polykondensation oder Polyaddition in wasserundurchlässige bzw. wasserfeste Filme oder Schichten überführt werden. Geeignete monomere oder oligomere Komponenten können beispielsweise Epoxide, Isocyanate, sogenannte Makromere, Ketonharze, Aldehydharze, Lactame, Lactone, Oxazoline, gesättigte und ungesättigte Polyester und Siliconharze sein.

Die den erfindungsgemäßen verkapselten Hydrogelen zugrunde liegenden hydrophilen, hochquellfähigen Hydrogele sind insbesondere Polymere aus (co)polymerisierten hydrophilen Monomeren, Pfropf(co)polymere von einem oder mehreren hydrophilen Monomeren auf eine geeignete Pfropfgrundlage, vernetzte Cellulose- oder Stärkeether oder in wäßrigen Flüssigkeiten quellbare Naturprodukte, wie beispielsweise Guarderivate. Diese Hydrogele sind dem Fachmann bekannt und beispielsweise beschrieben in US-4,286,082, DE-C-27 06 135, US-4,340,706, DE-C-37 13 601, DE-C-28 40 010, DE-A-43 44 548, DE-A-40 20 780, DE-A-40 15 085, DE-A-39 17 846, DE-A-38 07 289, DE-A-35 33 337, DE-A-35 03 458, DE-A-42 44 548, DE-A-42 19 607, DE-A-40 21 847, DE-A-38 31 261, DE-A-35 11 086, DE-A-31 18 172, DE-A-30 28 043, DE-A-44 18 881, EP-A-801483, EP-A-455985, EP-A-467073, EP-A-312952, EP-A-205874, EP-A-499774, DE-A-26 12 846, DE-A-40 20 780 EP-A-205674, US-5,145,906, EP-A-530438, EP-A-670073, US-4,057,521, US-4,062,817, US-4,525,527, US-4,295,987, US-5,011,892, US-4,076,663 oder US-4,931,497. Der Inhalt der vorstehend genannten Patentdokumente ist ausdrücklich Bestandteil der vorliegenden Offenbarung.

Zur Herstellung dieser hydrophilen, hochquellfähigen Hydrogele geeignete hydrophile Monomere sind beispielsweise polymerisationsfähige Säuren, wie Acrylsäure, Methacrylsäure, Vinylsulfonsäure, Vinylphosphonsäure, Maleinsäure einschließlich dessen Anhydrid, Fumarsäure, Itaconsäure, 2-Acrylamido-2-methylpropansulfonsäure, 2-Acrylamido-2-methylpropanphosphonsäure sowie deren Amide, Hydroxyalkylester und aminogruppen- oder ammoniumgruppenhaltige Ester und Amide. Des weiteren wasserlösliche N-Vinylamide oder auch Diallyldimethyl-ammoniumchlorid.

Bevorzugte hydrophile Monomere sind Verbindungen der Formel I 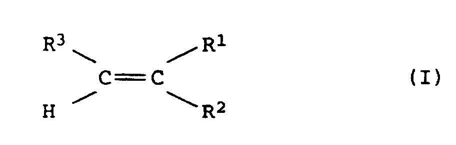 worin
R¹ Wasserstoff, Methyl oder Ethyl,
R² die Gruppe -COOR⁴, die Sulfonylgruppe, die Phosphonylgruppe, die mit (C₁-C₄)-Alkanol veresterte Phosphonylgruppe oder eine Gruppe der Formel 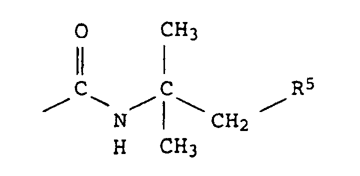
R³ Wasserstoff, Methyl, Ethyl oder die Carboxylgruppe.
R⁴ Wasserstoff, Amino oder Hydroxy-(C₁-C₄)-Alkyl und
R⁵ die Sulfonylgruppe, die Phosphonylgruppe oder die Carboxylgruppe bedeuten.

Beispiele für (C₁-C₄)-Alkanole sind Methanol, Ethanol, n-Propanol oder n-Butanol.

Besonders bevorzugte hydrophile Monomere sind Acrylsäure und Methacrylsäure.

Geeignete Pfropfgrundlagen für hydrophile Hydrogele, die durch Pfropfcopolymerisation olefinisch ungesättigter Säuren erhältlich sind, können natürlichen oder synthetischen Ursprungs sein. Beispiele sind Stärke, Cellulose oder Cellulosederivate sowie andere Polysaccharide und Oligosaccharide, Polyalkylenoxide, insbesondere Polyethylenoxide und Polypropylenoxide, sowie hydrophile Polyester.

Geeignete Polyalkylenoxide haben beispielsweise die Formel 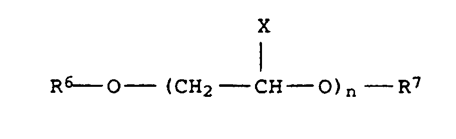 worin
R⁶ und R⁷ unabhängig voneinander Wasserstoff, Alkyl, Alkenyl oder Acryl,
X Wasserstoff oder Methyl und
n eine ganze Zahl von 1 bis 10 000 bedeuten.
R⁶ und R⁷ bedeuten bevorzugt Wasserstoff, (C₁-C₄)-Alkyl, (C₂-C₆)-Alkenyl oder Phenyl.

Bevorzugte Hydrogele sind insbesondere Polyacrylate, Polymethacrylate sowie die in US-4,931,497, US-5,011,892 und US-5,041,496 beschriebene Pfropfpolymere.

Die hydrophilen, hochquellfähigen Hydrogele sind bevorzugt vernetzt, d. h. sie enthalten Verbindungen mit mindestens zwei Doppelbindungen, die in das Polymernetzwerk einpolymerisiert sind. Geeignete Vernetzer sind insbesondere Methylenbisacryl- bzw. - methacrylamid, Ester ungesättigter Mono- oder Polycarbonsäuren von Polyolen, wie Diacrylat oder Triacrylat, z. B. Butandioloder Ethylenglykoldiacrylat bzw. -methacrylat sowie Trimethylolpropantriacrylat und Allylverbindungen wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinyl-phosphonsäurederivate, wie sie beispielsweise in der EP-A-343 427 beschrieben sind.

Darüber hinaus sind die hydrophilen, hochquellfähigen Hydrogele besonders bevorzugt in an sich bekannter Weise in wäßriger Gelphase nachvernetzt oder als gemahlene und abgesiebte Polymerpartikel oberflächenvernetzt. Dazu geeignete Vernetzer sind Verbindungen, die mindestens zwei Gruppen enthalten, die mit den Carboxylgruppen des hydrophilen Polymeren kovalente Bindungen bilden können. Geeignete Verbindungen sind beispielsweise Dioder Polyglycidylverbindungen, wie Phosphonsäurediglycidylester, Alkoxysilylverbindungen, Polyaziridine, Polyamine oder Polyamidoamine, wobei die genannten Verbindungen auch in Mischungen untereinander verwendet werden können (siehe beispielsweise EP-A-83022, EP-A-543303 und EP-A-530438). Als Vernetzer geeignete Polyamidoamine sind insbesondere in der EP-A-349935 beschrieben.

Die hydrophilen, hochquellfähigen Hydrogele können durch an sich bekannte Polymerisationsverfahren hergestellt werden. Bevorzugt ist die Polymerisation in wäßriger Lösung nach dem Verfahren der sogenannten Gelpolymerisation. Dabei werden 15 bis 50 gew.-%ige wäßrige Lösungen eines oder mehrerer hydrophiler Monomerer und gegebenenfalls einer geeigneten Pfropfgrundlage in Gegenwart eines Radikalinitiators bevorzugt ohne mechanische Durchmischung unter Ausnutzung des Trommsdorff-Norrish-Effektes (Bios Final Rep. 363.22; Makromol. Chem. 1, 169 (1947)), polymerisiert.

Die Polymerisationsreaktion kann im Temperaturbereich zwischen 0°C und 150°C, vorzugsweise zwischen 10°C und 100°C, sowohl bei Normaldruck als auch unter erhöhtem oder erniedrigtem Druck durchgeführt werden. Wie üblich kann die Polymerisation auch in einer Schutzgasatmosphäre, vorzugsweise unter Stickstoff,ausgeführt werden.

Zur Auslösung der Polymerisation können energiereiche elektromagnetische Strahlen oder die üblichen chemischen Polymerisationsinitiatoren herangezogen werden, z. B. organische Peroxide, wie Benzoylperoxid, tert. Butylhydroperoxid, Methylethyl-ketonperoxid, Cumolhydroperoxid, Azoverbindungen wie Azodiisobutyronitril sowie anorganische Peroxiverbindungen wie (NH₄)₂S₂O₈ oder K₂S₂O₈ oder H₂O₂ gegebenenfalls in Kombination mit Reduktionsmitteln wie Natriumhydrogensulfit, und Eisen(II)-sulfat oder Redoxsystemen, welche als reduzierende Komponente eine aliphatische und aromatische Sulfinsäure, wie Benzolsulfinsäure und Toluolsulfinsäure oder Derivate dieser Säuren enthalten, wie z. B. Mannichaddukte aus Sulfinsäure, Aldehyden und Aminoverbindungen, wie sie in der DE-C-1 301 566 beschrieben sind. Durch mehrstündiges Nachheizen der Polymerisatgele im Temperaturbereich 50 bis 130°C, vorzugsweise 70 bis 100°C, können die Qualitätseigenschaften der Polymerisate noch verbessert werden.

Nach der Verarbeitung der erfindungsgemäßen verkapselten Hydrogele mit beispielsweise natürlichen oder synthetischen Fasern zu beispielsweise Flächengebilden, muß zur Wiederherstellung ihrer Absorptionseigenschaften das Material, das die Aufnahme von Wasser oder wäßriger Flüssigkeiten verzögert oder verhindert, wieder entfernt werden.

Die Wiederherstellung der Absorptionseigenschaften der Hydrogele wird durch Entfernung des Materials, das die Aufnahme von Wasser oder wäßrigen Flüssigkeiten verzögert oder verhindert.

Die Entfernung des Materials, das die Aufnahme von Wasser oder wäßriger Flüssigkeiten verzögert oder verhindert, kann beispielsweise durch Einwirkung von Energie, je nach Art des Materials durch mechanische, thermische oder chemische Prozesse oder durch energiereiche Strahlung, erfolgen.

Ein mechanisches Aufbrechen der Verkapselung ist beispielsweise durch Druckbelastung in Pressen oder Kalandern und dergleichen oder durch Einwirkung von Ultraschall möglich. Im Falle von schmelzfähigen Verkapselungsmaterialien ist durch den Eintrag thermischer Energie eine Freisetzung der Quellfähigkeit der Hydrogele möglich. Bestimmte Verkapselungsmaterialien lassen sich auch durch Einwirkung geeigneter Lösungsmittel ablösen.

### Beispiele

### Testverfahren

Vortex-Test: In ein 100 ml Becherglas werden 50 ml 0,9 %ige NaCl-Lösung vorgelegt und unter Rühren bei 600 UpM mittels eines Magnetrührers 2,00 g Testsubstanz schnell so zugegeben, daß ein Klumpen vermieden wird. Es wird die Zeit gemessen (in Sekunden) bis der durch das Rühren entstehende Wirbel (engl. = vortex) der Flüssigkeit geschlossen und eine glatte Oberfläche entstanden ist.

Reagenzglas-Quellzeit-Test: Quellen bis 5 cm Höhe nach Überschichten mit 0,9 %iger Kochsalzlösung von 0,5 g Testsubstanz in einem 5 ml Fiolax-Reagenzglas.

Lock-Up-Time-Test:1g SAP (± 0,01 g) wird in eine Aluminiumschale (Durchmesser 57 mm) eingewogen. In einem Meßzylinder werden 30 ml 0,9 %ige NaCl-Lösung abgemessen und vorsichtig auf das in der Aluminiumschale verteilte SAP gegeben. Die Zeit zwischen erster Berührung der NaCl-Lösung mit dem SAP und vollständiger Absorption der NaCl-Lösung wird mit einer Stoppuhr ermittelt. Die benötigte Absorptionszeit wird in Sekunden notiert. Es wird eine Dreifachbestimmung durchgeführt und ein Mittelwert gebildet.

### Beispiel 1:

Der Versuch wurde in einem Wirbelschicht-Laborgerät (STREA-1 der Firma AEROMATIC-FIELDER AG), Typ "Coater", durchgeführt, wobei im "Wurster"-Verfahren (Batch-Verfahren) über eine Zweistoffdüse mittels einer Schlauchpumpe geförderte Flüssigkeit von unten auf das Bettmaterial aufgesprüht wird. Als Trägergas diente Luft, die innerhalb des Gerätes vor Eintritt in das Wirbelbett über eine Heizspirale auf maximal 100°C vorgewärmt wurde. Die Verdüsung erfolgte ebenfalls mit Luft über eine separate Zuführung ohne Vorwärmung. 200 g handelsüblicher Superabsorber (SANWET^{R} IM 7015 der CLARIANT GmbH) wurden im Wirbelschichtgerät vorgelegt und durch heißen Luftstrom auf ca. 75°C vorgewärmt. Es wurde ein Lochboden (durch den das Trägergas strömt) mit einem Widerstand von 6% und eine 0,8 mm Zweistoffdüse verwendet. Bei einem Trägergasstrom von ca. 140 m³/h, einer Eingangstemperatur von 96-99°C (Ausgangstemperatur 75 - 85°C) und einem Zerstäuberdruck von 1,0 bar wurden 600 g einer einer auf 5 % verdünnten, wässrigen Polymerdispersion auf Basis Styrol/Butadien (STYROFAN^{R} LD 716 der BASF AG) im Verlauf von 3 Stunden aufgedüst. Nach Abkühlen wurde, bezogen auf vorgelegtes Bettmaterial, ein Gewichtszuwachs von 25 g registriert, was einer Ausbeute von 96 % und einem Coating-Polymer-Anteil am Gesamtprodukt von 15 % entspricht. Die Restfeuchte des Produktes betrug <1 % gegenüber ca. 3% vor dem Coaten, das Kornspektrum war im Vergleich zum unverkapselten Ausgangsmaterial signifikant zum größeren Bereich hin verschoben. Es wurde im Vergleich zum Ausgangsprodukt [ 41 s ] eine deutlich verzögerte Anquellgeschwindigkeit (Vortex-Test) von 77 s registriert. Nach Aufmahlen des Produktes wurde mit 49 s eine Anquellzeit im Vortex-Test gemessen, die nahezu wieder dem Wert des Ausgangsproduktes entspricht.

### Beispiel 2:

In gleicher Apparatur wie in Beispiel 1 beschrieben, wurden 200 g Superabsorber (SANWET^{R} IM 7015 der CLARIANT GmbH) vorgelegt und unter gleichen Bedingungen sowie gleicher Vorgehensweise wurde eine homogene Mischung aus 182 g einer 9,1 %igen wässrigen Polyvinylalkohollösung (Mischung 1/1 aus MOWIOL^{R} 4-88 und MOWIOL^{R} 26-88 der Clariant GmbH), 4,5 g eines 76 %igen wässrigen Melamin-Formaldehyd-Kondensationsharzes (MADURIT^{R} SMW 818 der VIANOVA RESINS GMBH) und 50 g Wasser im Verlaufe von 2 Stunden aufgedüst. Auch dieses gecoatete Produkt wies im Vergleich zum Ausgangsprodukt eine deutliche Verschiebung des Kornspektrums zum gröberen Bereich auf. Es wurde eine Anquellgeschwindigkeit im Vortex-Test von 93 s gemessen, nach Aufmahlung des Produktes hingegen wieder von 51 s Ein Aufbrechen der Verkapselung wurde auch erzielt, indem das Granulat als 1 mm-Schicht zwischen die glatten Seiten zweier feuchter Zellstoffbahnen (Tartas Biofluff-Zellstoff C92 , 0,9 mm Dicke, ca. 75 % Feuchte) für 30 Sekunden mit einem 5 kg-Stahlzylinder einer Auflagefläche von 100 cm² belastet wurde. Im Reagenzglas-Quellzeit-Test wurden folgende Werte gefunden: Unverkapseltes Ausgangsprodukt = 26 s, verkapseltes Produkt = 57 s, auf gemahlenes Produkt = 29 s, durch Druckbelastung aufgebrochenes Produkt = 37 s .

### Beispiel 3:

Der Versuch wurde in einem Lödige-Labormischer (Typ: M5R) durchgeführt, wobei in einem Batch-Verfahren über eine Zweistoffdüse mittels einer Schlauchpumpe geförderte Flüssigkeit von oben in den Mischerinnenraum auf das zu verkapselnde, vorgeheizte (ca. 80-150°C, bevorzugt 140°C) Basismaterial aufgesprüht wird. Die Verdüsung erfolgt mit Stickstoff. 1000 g Base Polymer (SANWET^{R} IM 3000 P der Clariant GmbH) wurden im Lödige- Mischer vorgelegt und erhitzt. Bei einem Zerstäuberdruck von 0,5 bar wurde eine homogene Mischung aus 800 g 75%igem wäßrigem Melamin-Formaldehyd-Kondensationsharz (MADURIT^{R} SMW 818 der VIONOVA RESINS GMBH) und 200 g Isopropanol im Verlaufe von ca. 8h aufgedüst und 1h nachgetempert. Die Restfeuchte des Produktes betrug <1% gegenüber ca. 4,5% vor dem Coaten. Der Coating-Polymer-Anteil am Gesamtprodukt entspricht ca. 38%. Im Vergleich zum Ausgangsprodukt zeigt das erhaltene Produkt eine deutliche Verschiebung des Kornspektrums zum gröberen Bereich auf (Ausgangsmaterial: < 300µm = 100%, nach dem Coaten <300µm = ca. 5%). Es wurde im Vergleich zum Ausgangsprodukt [ 54 s ] eine deutlich verzögerte Anquellgeschwindigkeit im Vortex-Test von 5 min 55 s registriert.

### Beispiel 4:

In gleicher Apparatur wie in Beispiel 1 beschrieben, wurden 1000 g Base Polymer (SANWET^{R} IM 3000 P der Clariant GmbH) mit 200 g hydriertem Rizinusöl (CUTINA^{R} HR der Henkel AG) vorgelegt und gemischt. Der Mischerinhalt wird auf 100°C erhitzt und anschließend wieder auf Raumtemperatur abgekühlt. Der Coating-Wachs-Anteil am Gesamtprodukt entspricht ca 18%. Auch dieses gecoatete Produkt wies im Vergleich zum Ausgangsprodukt eine deutliche Verschiebung des Kornspektrums zum gröberen Bereich auf. Es wurde eine Anquellgeschwindigkeit im Vortex-Test von 2 min 06 s gemessen. Im Lock-Up-Time-Test wurde im Vergleich zum Ausgangsprodukt [ 94 s ] ebenfalls eine deutlich verzögerte Anquellgeschwindigkeit von 195 s gemessen.

Beispiele für die Entfernung des Materials, das die Aufnahme von Wasser oder wäßriger Flüssigkeiten verzögert oder verhindert:

### Beispiel 5:

### Mechanisches Aufbrechen der Verkapselung durch Druckbelastung in einer Presse

Das in Versuchsbeispiel 1 erhaltene gecoatete Polymer wird zwischen den glatten Seiten zweier Zellstoffbahnen (Tartas Biofluff-Zellstoff C92, 0,9 mm Dicke, ca 75% Feuchte) in einer Presse (eigentl. Anwendungsgebiet Herstellung von KBr-Presslingen für die IR-Spektroskopie) von der Firma PAUL WEBER / Stuttgart für 6 s bei Drücken von 100 und 200 bar belastet. Von dem Ausgangsmaterial (SANWET^{R} IM 3000 P der Clariant GmbH) werden entsprechende Blindwerte durchgeführt. Es wurde ein Vortex-Test durchgeführt.

| **Vortex-Test:** **Druckbelastung** | | | |
|---|---|---|---|
| | ohne Belastung | 100 bar | 200 bar |
| Ausgangsmaterial | 54 s | 50 s | 47 s |
| gecoatetes Polymer | 355 s | 98 s | 54 s |

### Beispiel 6:

Aufbrechen der Verkapselung durch Einwirkung von Ultraschall Jeweils 2 g des in Versuchsbeispiel 1 erhaltenen Polymer wird in einem 150 ml Becherglas im Wasserbad mit einem Ultraschall-Gerät vom Typ Sonoplus HD 200 Hochleistungsdesintegrator für 1 min und 5 min behandelt. Von dem Ausgangsmaterial (SANWET^{R} IM 3000 P der Clariant GmbH) werden entsprechende Blindwerte gemessen. Die Anquellgeschwindigkeiten wurden in einem Vortex-Test bestimmt.

| **Vortex-Test: Ultraschall-Behandlung** | | | |
|---|---|---|---|
| | ohne Beladung | 1 min | 5 min |
| Ausgangsmaterial | 54 s | 55 s | 53 s |
| gecoatetes Polymer | 355 s | 145 s | 75 s |

### Beispiel 7:

### Aufbrechen der Verkapselung durch Eintrag von thermischer Energie

Auf einem Papierfilter über einem Büchnertrichter mit Saugflasche (bei anliegendem Vakuum) wird das aus Versuchsbeispiel 2 erhaltene Polymer in einer dünnen Schicht (= keine übereinanderliegenden Körner) mit einem Infrarot-Bestrahlungsgerät RO 4300 erhitzt. Die aufgebrachte Wachsschicht schmilzt und wird über das Papierfilter und das anliegende Vakuum entfernt. Von dem Ausgangsmaterial (SANWET® IM 3000 P der Clariant GmbH) werden entsprechende Blindwerte gemessen. Von dem gecoatetem Polymer wurde nach thermischer Behandlung und Erkalten, sowie den Blindwerten ein Vortex-Test durchgeführt.

| **Vortex-Test: thermische Behandlung** | | | |
|---|---|---|---|
| | ohne Behandlung | 5 min | 10 min |
| Ausgangsmaterial | 54 s | 53 s | 50 s |
| gecoatetes Polymer | 126 s | 88 s | 74 s |

## Patentansprüche

1. Verkapseltes Hydrogel, umfassend ein hydrophiles, hochquellfähiges Hydrogel, das reversibel mit einem Material überzogen ist, das die Aufnahme von Wasser und wäßrigen Flüssigkeiten verzögert oder verhindert.

2. Verkapseltes Hydrogel nach Anspruch 1, **dadurch gekennzeichnet, daß** das Material, das die Aufnahme von Wasser oder wäßriger Flüssigkeiten verzögert oder verhindert, ein Homo- und/oder Copolymerisat olefinisch ungesättigter Verbindungen, vorzugsweise Ethylen, Propylen, Styrol, Ester olefinisch ungesättigter Säuren, Ester olefinisch ungesättigter Alkohole, ein Aminoplastharz, insbesondere Harnstoff oder Melamin/Aldehydharz, ein Phenolharz, ein Polyepoxid, eine Polyesterverbindung, ein Polyacetal, ein Polycarbonat, ein Polyamide, ein Polyurethan, ein Siliconharz, oder ein Keton/Aldehydharz oder Alkydharz ist.

3. Verkapseltes Hydrogel nach Anspruch 1 und/oder 2, **dadurch gekennzeichnet, daß** das hydrophile, hochquellfähige Hydrogel ein Polymer aus (co)polymerisierten hydrophilen Monomeren, ein Pfropf(co)polymer von einem oder mehreren hydrophilen Monomeren auf eine geeignete Pfropfgrundlage, ein vernetzter Cellulose- oder Stärkeether oder ein in wäßrigen Flüssigkeiten quellbares Naturprodukt, insbesondere ein Guarderivat, ist.

4. Verkapseltes Hydrogel nach Anspruch 3, **dadurch gekennzeichnet, daß** die hydrophilen Monomere Verbindungen der Formel I 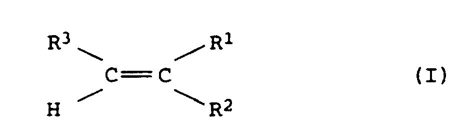 worin
R¹ Wasserstoff, Methyl oder Ethyl,
R² die Gruppe -COOR⁴, die Sulfonylgruppe, die Phosphonylgruppe, die mit (C₁-C₄)-Alkanol veresterte Phosphonylgruppe oder eine Gruppe der Formel 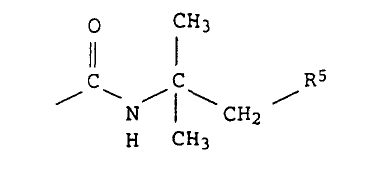
R³ Wasserstoff, Methyl, Ethyl oder die Carboxylgruppe,
R⁴ Wasserstoff, Amino oder Hydroxy-(C₁-C₄)-Alkyl und
R⁵ die Sulfonylgruppe, die Phosphonylgruppe oder die Carboxylgruppe bedeuten, sind.

5. Verkapseltes Hydrogel nach Anspruch 3 und/oder 4, **dadurch gekennzeichnet, daß** die hydrophilen Monomere Acrylsäure oder Methacrylsäure sind.

6. Verwendung der verkapselten Hydrogele nach den Ansprüchen 1 bis 5 bei der Verarbeitung mit natürlichen oder synthetischen Fasern in wäßrigen Prozessen zu Plächengebilden und Wiederherstellung der Absorptionseigenschaften der Hydrogele durch Entfernung des Materials, das die Aufnahme von Wasser oder wäßrigen Flüssigkeiten verzögert oder verhindert.

7. Verwendung nach Anspruch 6, **dadurch gekennzeichnet, daß** die Entfernung des Materials, das die Aufnahme von Wasser oder wäßrigen Flüssigkeiten verzögert oder verhindert, durch Einwirkung von Energie in Form mechanischer, thermischer oder chemischer Prozesse oder in Form energiereicher Strahlung, erfolgt.

## Claims

1. An encapsulated hydrogel, encompassing a hydrophilic, highly swellable hydrogel which is reversibly coated with a material which delays or prevents the absorption of water and of aqueous liquids.

2. An encapsulated hydrogel as claimed in claim 1, wherein the material which delays or prevents the absorption of water or of aqueous liquids is a homo- and/or copolymer of olefinically unsaturated compounds, preferably ethylene, propylene, styrene, esters of olefinically unsaturated acids, esters of olefinically unsaturated alcohols, an amino resin, in particular urea or melamine-aldehyde resin, a phenolic resin, a polyepoxide, a polyester compound, a polyacetal, a polycarbonate, a polyamide, a polyurethane, a silicone resin or a ketone-aldehyde resin or alkyd resin.

3. An encapsulated hydrogel as claimed in claim 1 and/or 2, wherein the hydrophilic, highly swellable hydrogel is a polymer made from (co)polymerized hydrophilic monomers, or is a graft (co)polymer made from one or more hydrophilic monomers on a suitable graft base, or is a crosslinked cellulose or starch ether or a natural product which is swellable in aqueous liquids, in particular a guar derivative.

4. An encapsulated hydrogel as claimed in claim 3, wherein the hydrophilic monomers are compounds of the formula I 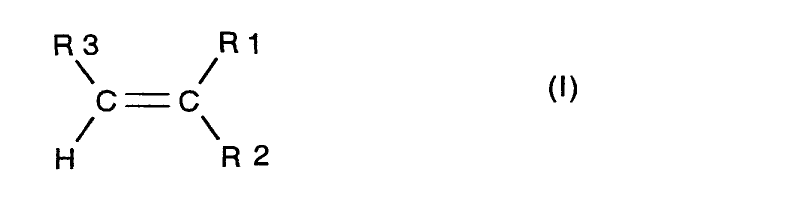 where
R¹ is hydrogen, methyl or ethyl,
R² is the -COOR⁴ group, the sulfonyl group, the phosphonyl group, the phosphonyl group esterified with (C₁-C₄) alkanol or a group of the formula 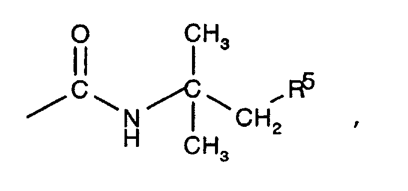
R³ is hydrogen, methyl, ethyl or the carboxyl group,
R⁴ is hydrogen, amino or hydroxy-(C₁-C₄)-alkyl, and
R⁵ is the sulfonyl group, the phosphonyl group or the carboxyl group.

5. An encapsulated hydrogel as claimed in claim 3 and/or 4, wherein the hydrophilic monomers are acrylic acid or methacrylic acid.

6. The use of the encapsulated hydrogels as claimed in any of claims 1 to 5 in processing with natural or synthetic fibers in aqueous processes to give sheeting and reinstating the absorption properties of the hydrogels by removing the material which delays or prevents the absorption of water or of aqueous liquids.

7. The use as claimed in claim 6, wherein the removal of the material which delays or prevents the absorption of water or of aqueous liquids is brought about by the action of energy in the form of mechanical, thermal or chemical processes, or in the form of high-energy radiation.

## Revendications

1. Hydrogel encapsulé, comportant un hydrogel hydrophile, à forte capacité de gonflement, qui est revêtu de manière réversible par une matière qui retarde ou empêche l'absorption d'eau et de liquides aqueux.

2. Hydrogel encapsulé suivant la revendication 1, **caractérisé en ce que** la matière, qui retarde ou empêche l'absorption d'eau ou de liquides aqueux, est un homopolymère et/ou copolymère de composés oléfiniquement insaturés, de préférence d'éthylène, de propylène, de styrène, d'esters d'acides oléfiniquement insaturés, d'esters d'alcools oléfiniquement insaturés, une résine aminoplaste, en particulier une résine d'urée ou de mélamine/aldéhyde, une résine phénolique, un polyépoxyde, un composé de polyester, un polyacétal, un polycarbonate, un polyamide, un polyuréthanne, une résine de silicone, ou une résine de cétone/aldéhyde ou une résine alkyde.

3. Hydrogel encapsulé suivant la revendication 1 et/ou 2, **caractérisé en ce que** l'hydrogel hydrophile, à forte capacité de gonflement, est un polymère de monomères hydrophiles (co)polymérisés, un (co)polymère de greffage d'un ou de plusieurs monomères hydrophiles sur une base de greffage appropriée, un éther de cellulose ou d'amidon réticulé ou un produit naturel gonflable dans des liquides aqueux, en particulier un dérivé de guar.

4. Hydrogel encapsulé suivant la revendication 3, **caractérisé en ce que** les monomères hydrophiles sont des composés de la formule I : 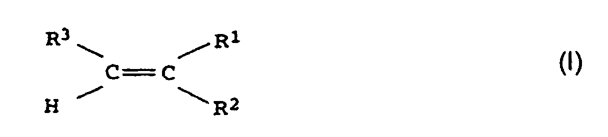 dans laquelle
R¹ représente de l'hydrogène, du méthyle ou de l'éthyle,
R² représente le groupe -COOR⁴, le groupe sulfonyle, le groupe phosphonyle, le groupe phosphonyle estérifié par un alcanol-(C₁-C₄) ou un groupe de la formule : 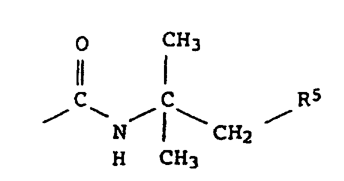
R³ représente de l'hydrogène ou un groupe méthyle, éthyle ou carboxyle,
R⁴ représente de l'hydrogène, de l'amino, ou un hydroxy-(C₁-C₄)-alkyle, et
R⁵ représente le groupe sulfonyle, le groupe phosphonyle ou le groupe carboxyle.

5. Hydrogel encapsulé suivant la revendication 3 et/ou 4, **caractérisé en ce que** les monomères hydrophiles sont de l'acide acrylique ou de l'acide méthacrylique.

6. Utilisation des hydrogels encapsulés suivant l'une des revendications 1 à 5, pour le traitement avec des fibres naturelles ou synthétiques dans des processus aqueux de façon à former des articles plans et pour restituer les propriétés d'absorption des hydrogels par élimination de la matière qui retarde ou empêche l'absorption d'eau ou des liquides aqueux.

7. Utilisation suivant la revendication 6, **caractérisée en ce que** l'élimination de la matière, qui retarde ou empêche l'absorption d'eau ou de liquides aqueux, s'effectue par action d'énergie sous forme de processus mécaniques, thermiques ou chimiques ou sous forme de rayonnement riche en énergie.
